(19) Europäisches Patentamt
European Patent Office
Office européen des brevets

(11) **EP 2 579 655 B1**

(12) **EUROPEAN PATENT SPECIFICATION**

(45) Date of publication and mention
of the grant of the patent:
**19.03.2014 Bulletin 2014/12**

(51) Int Cl.:
***H04W 52/34*** *(2009.01)* ***H04W 52/32*** *(2009.01)*

(21) Application number: **11183709.2**

(22) Date of filing: **03.10.2011**

(54) **Method and network for managing the transmit power of a broadcast channel**

Verfahrenund Netzwerk zur Verwaltung der Übertragungsleistung eines Rundfunkkanals

Procédé et réseau de gestion de la puissance de transmission d'un canal de diffusion

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.04.2013 Bulletin 2013/15**

(73) Proprietor: **Alcatel Lucent**
**75007 Paris (FR)**

(72) Inventors:
• **Alberi Morel, Marie-line**
**91620 Nozay (FR)**
• **Sayadi, Bessem**
**91620 Nozay (FR)**

(74) Representative: **Therias, Philippe**
**Alcatel-Lucent International**
**32, avenue Kléber**
**92700 Colombes (FR)**

(56) References cited:
**EP-A1- 2 152 029** **EP-A1- 2 262 289**
**US-A1- 2005 043 033** **US-A1- 2005 085 254**

**Description**

FIELD OF THE INVENTION

The present invention relates to a method for managing the transmit power of a broadcast channel transmitted by a radio access point in a cellular radiocommunication network in a geographical area of the radio coverage of a cell served by the radio access point, the cellular radiocommunication network further comprising user terminals adapted for receiving data transmitted by radio access points over broadcast and/or unicast channels. The invention also relates to a cellular radiocommunication network for carrying out said method.

Such a method may be used in any cellular radiocommunication network proposing a multicast broadcast multimedia services.

BACKGROUND OF THE INVENTION

A method for managing the transmit power of a broadcast channel transmitted by a radio access point in a cellular radiocommunication network in a geographical area of the radio coverage of a cell served by the radio access point, the cellular radiocommunication network further comprising user terminals adapted for receiving data transmitted by radio access points over broadcast and/or unicast channels, well known by the man skilled in the art as dynamic forward access channel (FACH), comprises the step of adjusting the transmit power according to the feedback of the user terminals. This permits to limit the consumption of the power margin required on the transmit power to maintain the required quality of service.

One problem of the well-known prior art is that it requires identifying the user terminals receiving the broadcast service via the broadcast channel. When no such identification mechanism is available, and therefore no feedback' user terminals is available, such a method can't be implemented. Another problem is that when the transmit power of the broadcast channel, some user terminals will be outside the broadcast coverage channel and will receive the broadcast service via an unicast channel. The transmit power of said unicast channel used for the broadcast service is greater than the transmit power of the broadcast channel used for said broadcast service, therefore, the total transmit power emitted by the base station of said cell may be exceeded.

US 2005/0043033 A1 discloses (cf claim 1) a method for power allocation and user assignment for multimedia broadcast multicast services, comprising:

- transmitting a pilot signal to a plurality of user equipments;
- sorting each of the plurality of user equipements by a strength of the pilot signal;
- determining a number of a particular user equipment of the plurality of user equipments to support on a broadcast channel;
- assigning a portion of the plurality of user equipments to the broadcast channel.

The remaining user equipments will receive the MBMS service via respective dedicated channels. The power of the broadcast channel will be set according to the required power to serve the user equipment with the weakest S/N ratio which is supported on the broadcast channel.

US 2005/0085254 A1 discloses a method (cf [27]-[29]) for managing the transmit power of a broadcast channel transmitted by a radio access point in a cellular radio communication network in the radio coverage of a cell served by the radio access point, the cellular radio communication network further comprising user terminals adapted for receiving multicast information transmitted by radio access points over broadcast or unicast channels (dedicated channels directed towards end users). The method comprises calculating the number of users that will receive the multicast information via the broadcast channel (Cf equation 1), based on power consumption, then calculating the average required dynamic power setting (cf graph 500). The remaining users will receive the multicast information via respective unicast channels.

EP 2 152 029 A1 discloses a method for providing a multicast service in a cellular network, comprising : if the quality of service of the multicast service for a mobile station falls below a predetermined threshold value, then the multicast service is continued on a point-to-point channel, or the transmission power of the multipoint-to-point channel is increased.

SUMMARY OF THE INVENTION

It is an object of the invention to provide a method for managing the transmit power of a broadcast channel transmitted by a radio access point in a cellular radiocommunication network in a geographical area of the radio coverage of a cell served by the radio access point, the cellular radiocommunication network further comprising user terminals adapted for receiving data transmitted by radio access points over broadcast and/or unicast channels, which permits to reduce the transmit power without having any feedback from the user terminals.

To this end, there is provided a method for managing the transmit power of a broadcast channel transmitted by a radio access point in a cellular radiocommunication network in a geographical area of the radio coverage of a cell served by the radio access point, the cellular radiocommunication network further comprising user terminals adapted for receiving data transmitted by radio access points over broadcast and/or unicast channels, the method comprising, with respect to user terminals receiving data broadcast by the radio access point in an established broadcast session over the broadcast channel:

- decreasing the transmit power of the broadcast channel by a first predetermined amount ;
- determining over a predetermined time interval a plurality of estimates of the density of user terminals located within the cell and outside said geographical area, which user terminals receive the broadcast session through at least one of the unicast channels; and
- increasing the transmit power of the broadcast channel by a predetermined amount if the values of estimates of the density tend to increase over time.

As we will see in further details, by controlling automatically the transmit power level of broadcast channel in a cell by monitoring the unicast (point-to-point) service bearers (user data channel) of user terminals requesting the broadcast services over unicast channel permits to save transmit power (reduce the margin). Moreover, the density of the unicast user terminals requesting broadcast services is controlled in order to not trespassing a certain limit, thus avoiding also energy consumption for those user terminals (which find themselves on cell border). It is to be reminded that the more a user terminal is on a border cell (far from the emitted base station), the bigger the unicast transmit power used to attain these user terminals is.

In a first non-limiting embodiment, the density estimates are determined using the sum of unicast powers transmitted to the users that use a unicast channel for said broadcast session, the method further comprising:

- determining estimates of said sum of unicast powers;
- if said sum estimate is above a predetermined threshold, performing said increasing by said first predetermined amount, or
- if said sum estimate is equal to the predetermined threshold, second decreasing the transmit power by the first predetermined amount.

Hence, as long as one user terminal is outside the broadcast coverage zone, the transmit power is set up to its previous value. But, when no user terminal is outside the broadcast coverage zone, the transmit power may be decreased until the broadcast channel is switched-off.

In a second non-limiting embodiment, the density estimates are determined using the sum of unicast powers transmitted to the users that use a unicast channel for said broadcast session, and the method further comprising:

- determining estimates of said sum of unicast powers;
- determining whether the values of such estimates of the sum of unicast powers have increased or decreased over the predetermined time interval ;
- if the values of the estimates of the sum of unicast powers tend to increase over the predetermined time interval, performing said increasing with a second predetermined amount ; or
- if the values of the estimates of the sum of unicast powers tend to decrease over the predetermined time interval, second decreasing the transmit power of the broadcast channel by the first predetermined amount.

In a third non-limiting embodiment, the total traffic power over the cell comprises:

- the handover traffic power of the handovers user terminals passing through the cell ;
- the unicast traffic power of user terminals using unicast channel to receive a broadcast session or to receive a unicast session ;
- the broadcast traffic power of user terminals using broadcast channel to receive a broadcast session ; and
- the controlling traffic power.

In a fourth non-limiting embodiment, said broadcast channel is an MBMS channel.

In addition, there is provided a cellular radiocommunication network for managing the transmit power of a broadcast channel transmitted by a radio access point in said cellular radiocommunication network in a geographical area of the radio coverage of a cell served by the radio access point, the cellular radiocommunication network further comprising user terminals adapted for receiving data transmitted by radio access points over broadcast and/or unicast channels, said cellular radiocommunication network comprising tuning means adapted to, with respect to user terminals receiving data broadcast by the radio access point in an established broadcast session over the broadcast channel:

- decreasing the transmit power of the broadcast channel by a first predetermined amount;
- determining over a predetermined time interval a plurality of estimates of the density of user terminals located within the cell and outside said geographical area, which user terminals receive the broadcast session through at least one of the unicast channels; and
- increasing the transmit power of the broadcast channel by a predetermined amount if the values of estimates of the density tend to increase over time.

In a first non-limiting embodiment, the density estimates are determined using the sum of unicast powers transmitted to the users that use a unicast channel for said broadcast session, and wherein the tuning means are adapted to:

- determining estimates of said sum of unicast powers;
- if said sum estimate is above a predetermined threshold, performing said increasing by said first predetermined amount , or
- if said sum estimate is equal to the predetermined threshold, second decreasing the transmit power by the first predetermined amount.

In a second non-limiting embodiment, the density estimates are determined using the sum of unicast powers transmitted to the users that use a unicast channel for said broadcast session, and wherein the tuning means are adapted to:

- determining estimates of said sum of unicast powers;
- determining whether the values of such estimates of the sum of unicast powers have increased or decreased over the predetermined time interval ;
- if the values of the estimates of the sum of unicast powers tend to increase over the predetermined time interval, performing said increasing with a second predetermined amount; or
- if the values of the estimates of the sum of unicast powers tend to decrease over the predetermined time interval, second decreasing the transmit power of the broadcast channel by the first predetermined amount.

In a third non-limiting embodiment, said tuning means are composed of a radio resource controller of said radio access point.
In a fourth non-limiting embodiment, said tuning means are composed of a broadcast multicast service center.
In addition, there is provided a computer program product, comprising a set of instructions, which when loaded into said computer, causes the computer to carry out the method for managing the transmit power of a broadcast channel, according to any one of the previous characteristics.

BRIEF DESCRIPTION OF THE FIGURES

Some embodiments of methods and/or apparatus in accordance with embodiments of the present invention are now described, by way of example only, and with reference to the accompanying drawings, in which:

- Fig.1 illustrates a schematic organization chart of the method for managing the transmit power of a broadcast channel transmitted by a radio access point in a cellular radiocommunication network in a geographical area of the radio coverage of a cell served by the radio access point according to a non-limiting embodiment of the invention;
- Fig. 2 illustrate a cell comprising a broadcast coverage zone defined by the managing of the transmit power of a broadcast channel according to the method of Fig. 1;
- Fig.3 illustrates a schematic organization chart of a first non-limiting embodiment of the method of Fig. 1;
- Fig.4 illustrates a schematic organization chart of a second non-limiting embodiment of the method of Fig. 1;
- Fig.5 illustrates a non-limiting variant of the second non-limiting embodiment of Fig. 4;
- Fig.6 illustrates schematically in a first non-limiting embodiment a cellular radiocommunication network which is adapted to carry out the method of Fig.1 to Fig. 5; and
- Fig.7 illustrates schematically in a second non-limiting embodiment a cellular radiocommunication network which is adapted to carry out the method of Fig.1 to Fig. 5.

DESCRIPTION OF EMBODIMENTS OF THE INVENTION

In the following description, well-known functions or constructions by the man skilled in the art are not described in detail since they would obscure the invention in unnecessary detail.

The present invention relates to a method for managing the transmit power PFACH of a broadcast channel MBMS_CH transmitted by a radio access point in a cellular radiocommunication network in a geographical area Zu of the radio coverage of a cell C served by the radio access point eNodeB, the cellular radiocommunication network further comprising user terminals adapted for receiving data transmitted by radio access points over broadcast and/or unicast channels.

A broadcast session MBMS_S is a period of time during which broadcast data are transmitted, either in one set or using several data files. Broadcast data are in non-limiting examples a video or a channel provided by a content provider.

As will be described hereinafter, according to the method, one iteratively decreases the power of broadcast channel, monitors if unicast connections requesting the same broadcasted service are activated, if not, one continues decreasing process until switch off the broadcast channel or until reach of an equilibrium, or increasing the power of the broadcasted channel if useful.

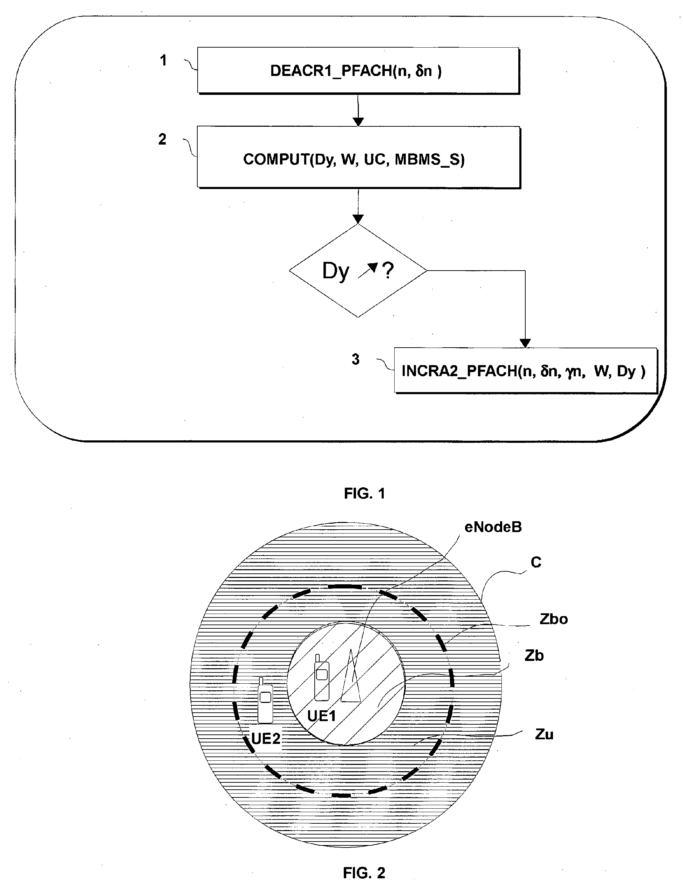

The method M for managing the transmit power PFACH of a broadcast channel MBMS_CH transmitted by a radio access point in a cellular radiocommunication network in a geographical area Zu of the radio coverage of a cell C served by the radio access point eNodeB, the cellular radiocommunication network further comprising user terminals adapted for receiving data transmitted by radio access points over broadcast and/or unicast channels is illustrated in Fig. 1. Said method comprising, with respect to user terminals receiving data broadcast by the radio access point in an established broadcast session MBMS_S over the broadcast channel:

-   decreasing the transmit power of the broadcast channel PFACH by first predetermined amount $\delta_n$ (DEACR1_PFACH $(n, \delta_n)$ as illustrated in Fig. 1);
-   determining over a predetermined time interval W a plurality of estimates of the density Dy of user terminals UE located within the cell C and outside said geographical area Zu, which user terminals receive the broadcast session through at least one unicast channel (COMPUT(Dy, W, UC, MBMS_S) as illustrated in Fig. 1); and
-   increasing the transmit power of the broadcast channel PFACH by a predetermined amount $\delta_n$, $\gamma_n$ if the values of estimates of the density Dy tend to increase over time (INCREA2_PFACH(n, $\delta_n$, $\gamma_n$, W, Dy)).

In a non-limiting example, the broadcast channel MTCH_CH is defined as a Multicast Broadcast Multimedia Service Channel (MBMS Channel) according to the 3G standard such as UMTS, the 3G+ standard such as enhanced UTRAN (WCDMA/HSPA), or either the 4G standard such as LTE.

A radio access point also called base station eNodeB has a maximal budget of power which is denoted by MaxTxPower which is configured by the operator (which manages the network within which the base station eNodeB operates). This base station power MaxTxPower is dispatched between the unicast channels, control channels and the broadcast channel.

Therefore, one has the following relation:

$$P_{DCH} + Pho + Pcch + Pw\_MTCH <= MaxTxPower$$

where:

-   Pcch denotes the power allocated to traffic control (including power for MBMS notification Indicator Channel (MICH) and MBMS PTM Control Channel in 3G standards). In a non-limiting example in the 3G standard, Pcch=64W;
-   Pho denotes the power allocated to the handover user terminals;
-   $P_{DCH}$: denotes the power of the unicast channels (e.g. DCH channels in 3G standards) ; and
-   Pw_MTCH denotes the power allocated for the broadcast channel (MBMS Transport Channel in 3G standards).

The Forward Access Channel (FACH) is the channel transporting the MTCH channel. In the rest of the description, the variable PFACH which is equal to Pw_MTCH is used.

On assumes that the value of PFACH is initialized by the Operation Management System (e.g. imposed by the network operator).

In the rest of the description, a MBMS channel is taken as a non-limiting example as a broadcast channel.

The managing method is described in details below according to two non-limiting embodiments.

As described below, one modifies the broadcast coverage and one detects the MBMS activity out of the MBMS reduced coverage. To do that, the power of the broadcast channel will be varied (increase or decrease) and the induced density variation of unicast users having an active broadcast session will be monitored/observed. Indeed, in order to ensure the MBMS service continuity, the discarded MBMS subscribers will request the broadcast service in unicast mode, said discarded subscribers being outside the broadcast coverage zone Zb.

If the density estimates increases, then the network raises Pw_MTCH and if the density estimates diminished, Pw_MTCH is decreased.

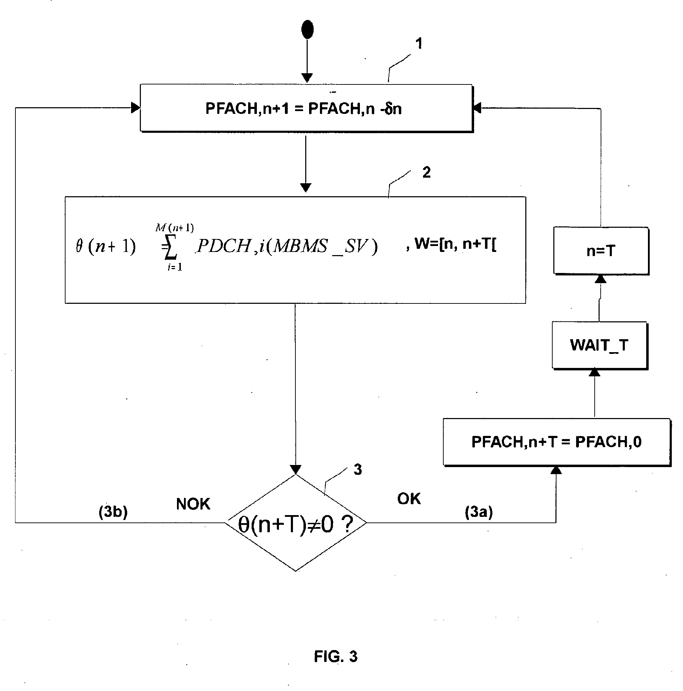

• First non-timing embodiment illustrated in Fig. 3.

According to this first non-limiting embodiment, the density estimates Dy are determined using the sum of unicast powers $\Sigma PDCH$.

The diagram in Fig. 2 depicts the switch-off of the FACH channel if no MBMS subscribers are connected. A MBMS subscriber is a user terminal which is connected to a broadcast session MBMS to receive a broadcast service MBMS (either via a broadcast channel or via a unicast channel).

The diagram describes the adaptation process of the PFACH for a cell/zone where a MBMS service is active. In the drawing, one refers to:

- the total transmit power at instant n of a broadcast services bearer (FACH or MTCH) as PFACH, n
- the power variation of PFACH,n is set to $\delta n$
- the total transmit power at instant n of only unicast bearers of the user terminals receiving the MBMS service is set to $\theta$ (n) where $\theta$ (n+1) is the number of discarded/new MBMS users (at instant n).

As described hereinafter, one starts by decreasing the power budget of PFACH by a step of $\delta n$. Then, one evaluates the power required to serve the discarded subscribers connecting to the MBMS session (i.e. one monitors the random variable $\theta(n)$).

It is to be noted that when user terminals connected to a MBMS session via a MBMS channel to receive a MSBMS service found themselves outside the broadcast coverage zone, they connect to a unicast session to receive the MBMS service. This mechanism is called Packet Switched Stream PSS and is described in 3GPP TR 26.903 V10.0.0 (2011-03) entitled "Improved video support for Packet Switched Streaming (PSS) and Multimedia Broadcast/Multicast Service (MBMS) Services (Release 10)".

**In a first step 1),** if said sum $\Sigma P_{DCH}$ is different from a predetermined threshold, one first decreases the transmit power PFACH from a first predetermined amount $\delta_n$ (as illustrated in Fig; 3).

It is to be noted that this predetermined threshold is equal to zero.

The action of power decreasing is set at instant n.

Therefore, PFACH, n+1=PFACH, n - $\delta n$.

**In a second step 2),** one determines over a determined time interval W the estimates of the sum of unicast powers $\Sigma PDCH$ (represented by the user terminals UE within the cell C and outside said geographical zone (Zb, that means Zu), which use a unicast channel UC_CH for said broadcast session).

Hence, one evaluates the power $\Sigma PDCH$ required to serve the discarded subscribers connecting to the MBMS session. The discarded subscribers are the user terminals (illustrated UE2 in Fig. 2) which were under the coverage of the broadcast channel (older coverage Zbo in dash lines), but have been put outside the broadcast coverage (i.e. they are outside the new broadcast coverage Zb in diagonal hatching and within the broadcast-off coverage Zu in horizontal hatching) because of the decrease of the coverage such as illustrated in Fig. 2. It is to be noted that said unicast traffic power $\Sigma PDCH$ of user terminals using unicast channel for broadcast session is evaluated according to the service (here the broadcast service) which is transmitted over the unicast channel (in the example a dedicated transport channel DCH), for example via an identifier of said service.

**In a third step 3),** if said sum estimate $\Sigma P_{DCH}$ is above a predetermined threshold (it has increased), one performs said increasing with said first predetermined amount $\delta_n$ (illustrated 3a in Fig. 3).

Said increasing means the increasing of the transmit power of the broadcast channel PFACH by a predetermined amount $\delta_n$, $\gamma_n$ if the values of estimates of the density Dy tend to increase over time (INCREA2_PFACH(n, $\delta_n$, $\gamma_n$, W, Dy)).

Hence, if the random variable $\theta(n+T)$ is above zero, the PFACH, n+T is set to its initial value recovering the whole cell. The new broadcast coverage zone Zb is the whole cell. Initial value means the value from the preceding iteration, that is to say, here, the initial value recovering the whole cell.

It is to be noted that the same applied if the random variable $\theta(n+T)$ is below 0. Hence, when the random variable $\theta(n+T)$ is different from zero, one increases the transmit power of the broadcast channel PFACH.

On the contrary, if said sum $\Sigma P_{DCH}$ is equal to the predetermined threshold (i.e. is equal to zero), one performs a second decreasing of the transmit power PFACH from said first predetermined amount $\delta_n$ (illustrated 3b in Fig. 3). Hence, If the random variable $\theta(n+T)$ is equal to 0, one concludes that no MBMS subscribers are in the discarded broadcast zone Zu. Therefore, the process is re-iterated.

In a non-limiting embodiment, in order to offer enough time to the discarded subscribers to re-synchronize their data streams with the unicast connection, i.e., with the unicast bearer (that is to say, the activation of the MBMS service on the unicast channel will be performed), an observation window W of T seconds (in a non-limiting example of T=10sec) is introduced. Moreover, the behavior of the variable $\theta$ (n+T) is representative of the mobility of the user terminals which coming in and coming out of the broadcast coverage zone Zb, i.e. the unicast MBMS users.

After T, the validity of the last decision is to be rechecked since the user terminals are mobiles and the last decision could be obsolete. Hence, one takes into account the last value of $\theta(n+T)$.

**In a fourth step 4)**, one re-iterates the steps from the first decreasing.

Thus, if no induced unicast connections are induced over many decreasing actions, the broadcast channel MBMS is turned off.

It is to be noted that the wake up of the broadcast channel MBMS will be activated by a management module (RRC or BM-SC described later in the description) which is aware of all unicast traffic and has the knowledge of the MBMS area topology (it is able to identify that a given user terminal requests a handover on a cell belonging to a MBMS area whose MBMS channel is powered off). It is to be noted that a MBMS area is a set of cells.

Therefore, as long as there is one user terminal which asks for a MSBMS service over the unicast channel (i.e. those under the broadcast-off zone Zu), the broadcast channel MBMS is not switched off. It is switched off when there is no such user terminal outside the broadcast zone.

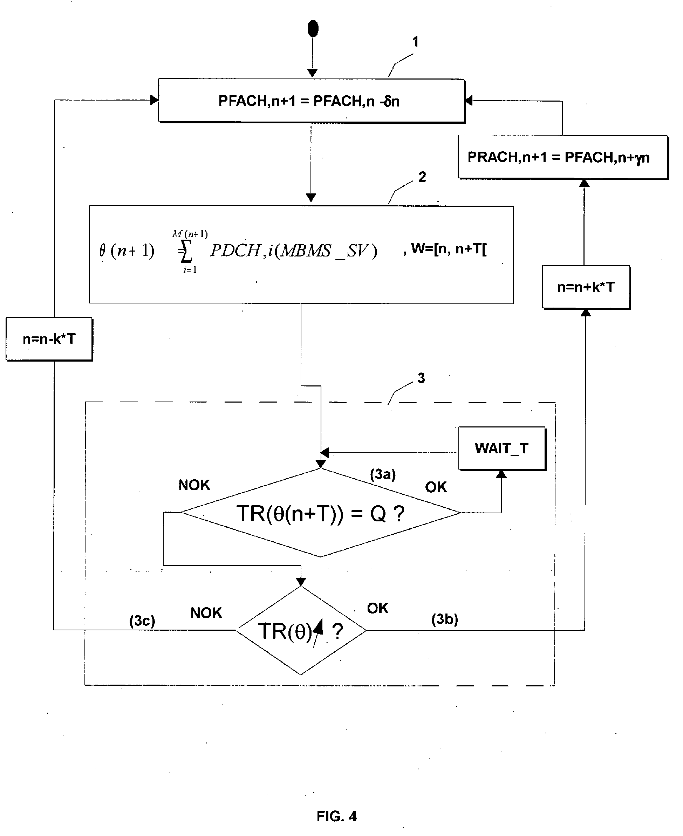

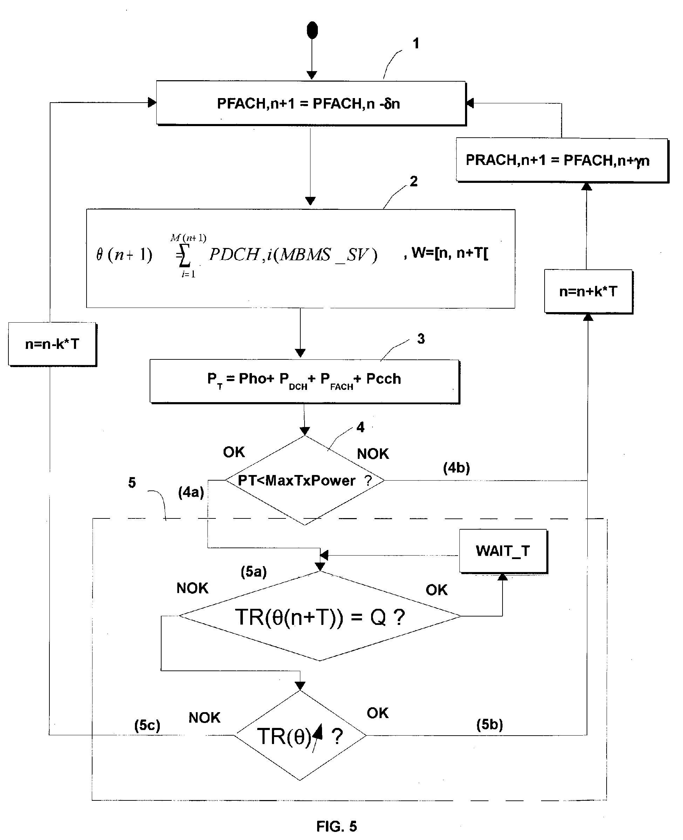

• <u>Second non-limiting embodiment illustrated in Fig. 4 and in Fig. 5.</u>

According to this second non-limiting embodiment, the density estimates Dy are determined using the sum of unicast powers $\Sigma$PDCH.

The diagram in Fig. 4 depicts the optimization of PFACH for a cell/zone where the MBMS service bearer is active. In the drawing, one refers to:

- the total transmit power at instant n of a broadcast services bearer (FACH or MTCH) as PFACH, n
- the total transmit power at instant n of only unicast bearers receiving the MBMS service is set to $\theta(n)$ where $\theta(n+1)$ is the number of discarded/new MBMS users.
- K denotes the number of times where the equilibrium is valid

As described hereinafter, one increases (resp. decreases) the power budget PFACH by a step of $\gamma n$ (resp. $\delta n$.). Then, one evaluates the power saved (resp. required) to serve the appealed (resp. discarded) subscribers connecting to the MBMS session (monitor the random variable $\theta(n)$).

**In a first step 1),** one first decreases the transmit power PFACH from a first predetermined amount $\delta_n$ (as illustrated in Fig. 4).

The action of power decreasing is set at instant n.

Therefore, PFACH, n+1=PFACH, n - $\delta n$.

**In a second step 2),** one determines estimates of the sum of unicast powers ($\Sigma P_{DCH}$) (represented by the user terminals UE within the cell C and outside said geographical zone (i.e. within Zu) which use a unicast channel UC_CH for said broadcast session).

To do so, one computes the sum of unicast powers $\Sigma P_{DCH}$ first.

Hence, one evaluates the power $\Sigma$PDCH required to serve the discarded subscribers connecting to the MBMS session (monitor the random variable $\theta(n)$). The discarded subscribers are the user terminals UE2 which were under the coverage of the broadcast channel (older coverage Zb in dash lines), but have been put outside the broadcast coverage (new coverage Zb in diagonal hatching and new broadcast-off coverage Zu in horizontal hatching) because of the decrease of the coverage such as illustrated in Fig. 3.

**In a third step 3),** one determines whether the values of such estimates of the sum of unicast powers $\Sigma P_{DCH}$ have increased or decreased over the predetermined time interval.

- if the values of the estimates tend to an equilibrium state (Q), one will recheck said values after a new observation period T (illustrated 3a in Fig. 4).

- if the values TR of the estimates of the sum of unicast powers $\Sigma P_{DCH}$ tend to increase over the predetermined time interval, one performs said increasing with a second predetermined amount $\gamma_n$; (illustrated 3b in Fig. 4). Said increasing means the increasing of the transmit power of the broadcast channel PFACH by a predetermined amount

$\delta_n$, $\gamma_n$ if the values of estimates of the density Dy tend to increase over time (INCREA2_PFACH(n, $\delta_n$, $\gamma_n$, W, Dy)).

If the values tend to increase, due to the mobility, the density of users in the broadcast-off zone Zu is increased (there are more user terminals using an unicast channel to receive a broadcast service than in the preceding iteration), therefore it is better to increase the power of the broadcast channel.
Hence, if the values tend to increase, the PFACH, n+1 is set to its initial value recovering the whole zone. The new broadcast coverage zone Zb is the preceding coverage zone Zb.

- if the values TR of the estimates of the sum of unicast powers $\Sigma P_{DCH}$ tend to decrease over the predetermined time interval, one decreases the transmit power of the broadcast channel by the first predetermined amount $\delta_n$(illustrated 3c in Fig. 4).
 If the values tend to decrease, due to the mobility, the density of users in the broadcast-off zone Zu is decreased (there are less user terminals using an unicast channel to receive a broadcast service than in the preceding iteration), therefore it could be interesting to decrease the power of the broadcast channel.
 Hence, if the values tend to decrease, one decides to continue decreasing the power of the broadcast channel.

In a non-limiting embodiment, in order to offer enough time to the discarded subscribers to re-synchronize their data streams with the unicast connection, an observation window W of [n, n+T[ seconds (in a non-limiting example of T=10sec) is introduced. It is to be noted that the re-synchronization avoids losing session continuity when the reception mode for a user is changing from broadcast to unicast.
Therefore, during the Ts, one observes the behavior of the variable 6(n+t) where t ∈ [n, n+T[.
Moreover, the behavior of the variable θ(n+t) is representative of the mobility of the user terminals which coming in and coming out of the broadcast coverage zone Zb.
After T, the validity of the last decision is to be rechecked since the user terminals are mobiles and the last decision could be obsolete.
In a non-limiting embodiment, illustrated in Fig. 5, in order to avoid consuming more power than the maximal base station power authorized MaxTxPower, **in a third step 3),** one computes the total traffic power $P_T$ over the cell (said total traffic power $P_T$ being emitted by the base station eNodeB).
The total traffic power $P_T$ over the cell comprises:

- the handover traffic power Pho of the handovers user terminals passing through the cell ;
- the unicast traffic power $P_{DCH}$ of the user terminals using unicast channel to receive a broadcast session or to receive a unicast session ;
- the broadcast traffic power $P_{FACH}$ of user terminals using broadcast channel to receive a broadcast session ; and
- the controlling traffic power Pcch.

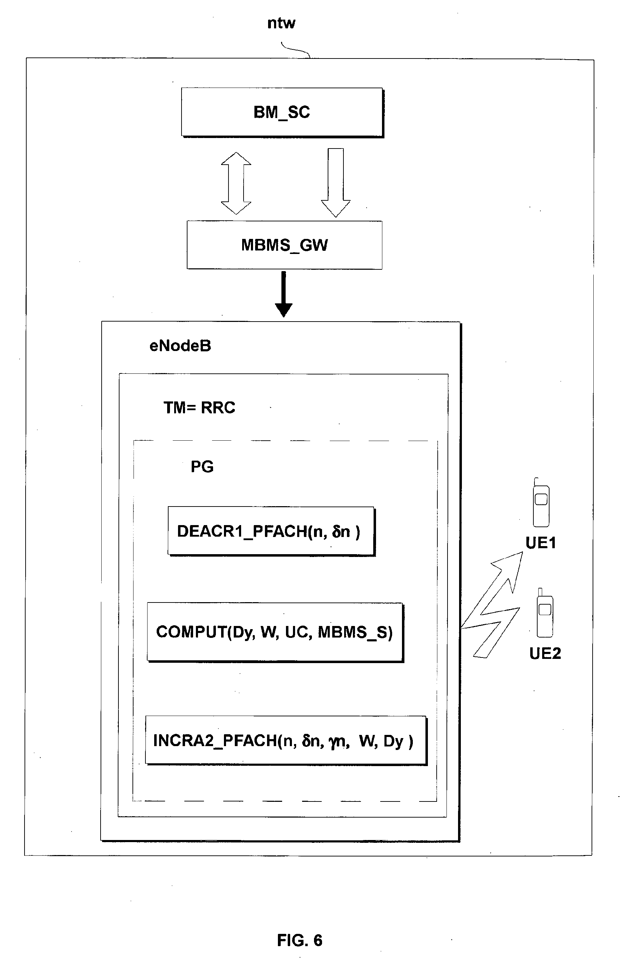

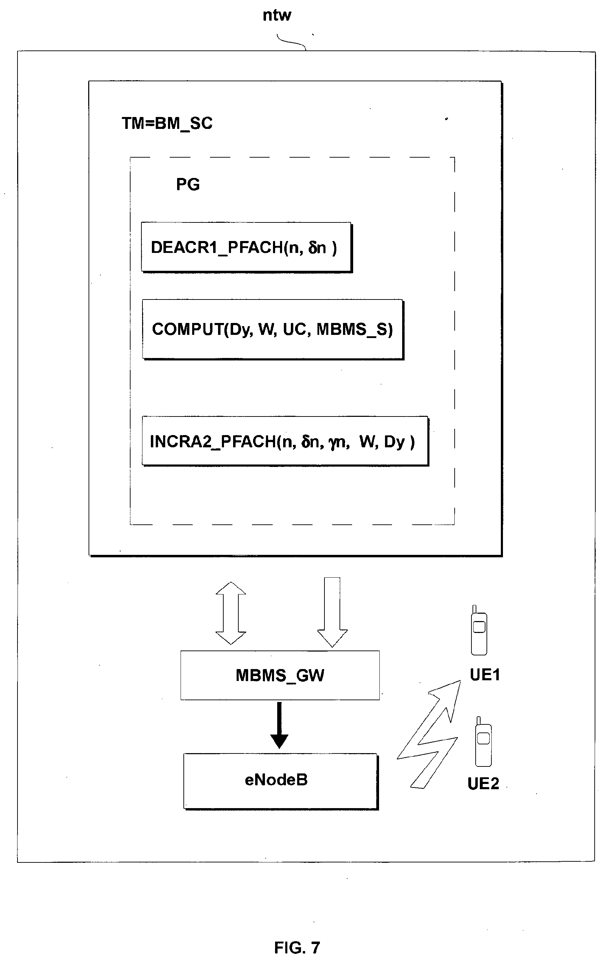

It is to be noted that the unicast user terminals using unicast channel for broadcast session (the discarded subscribers) will be located at the border of the cell (because outside of the broadcast coverage zone Zb) and therefore the unicast traffic power $P_{DCH}$ will be more important than the broadcast traffic power PFACH needed for the same number of user terminals using broadcast channel for broadcast session. Therefore, without testing the total traffic power $P_T$ over the cell, there may be a risk of exceeding the power MaxTxPower.
**In a fourth step 4),** if said total traffic power $P_T$ has decreased, one performs the test on the values TR of the estimates of the sum of unicast powers $\Sigma P_{DCH}$ (illustrated 4a in Fig. 5), otherwise, if said total traffic power $P_T$ has increased, one performs said increasing (illustrated 4b in Fig. 5) and one re-iterates the steps from the computing of the sum of unicast powers $\Sigma P_{DCH}$.
Hence, with this second non-limiting embodiment, when a user terminal asks for a MBMS service on the unicast channel, one observes if this situation is more profitable in term of total power consumption than the situation where the same user terminal asks for a MBMS service on the broadcast channel MBMS.
Hence, by reducing the radius of the broadcast coverage zone Zb according to the unicast user terminals accessing the MBMS service, the method for tuning the transmit power of a broadcast channel in a geographical zone of a cell permits to guarantee an optimal broadcast service coverage while saving transmit power consumption without requiring the implementation of users feedbacks from the broadcast area.
The managing method is carried out by a cellular radiocommunication network ntw for managing the transmit power PFACH of a broadcast channel MBMS_CH transmitted by a radio access point in said cellular radiocommunication network in a geographical area Zu of the radio coverage of a cell C served by the radio access point, the cellular radiocommunication network further comprising user terminals adapted for receiving data transmitted by radio access points over broadcast and/or unicast channels, as illustrated on Fig. 6 and Fig. 7.
Said cellular radiocommunication network ntw comprises tuning means TM adapted to, with respect to user terminals receiving data broadcast by the radio access point in an established broadcast session MBMS_S over the broadcast channel:

- decreasing the transmit power of the broadcast channel PFACH by first predetermined amount $\delta_n$;
- determining over a predetermined time interval W a plurality of estimates of the density Dy of user terminals UE located within the cell C and outside said geographical area Zu, which user terminals receive the broadcast session through at least one unicast channel ; and
- increasing the transmit power of the broadcast channel PFACH by a predetermined amount $\delta_n$, $\gamma_n$ if the values of estimates of the density Dy tend to increase over time.

Said cellular radiocommunication network ntw comprises:

- said radio access point also called base station eNobeB;
- said user terminals UE ;
- A MBMS gateway MBMS_GW for broadcasting the data packets to all base stations eNobeB within a broadcast area, as well as for managing the MBMS session. It serves as an entry point of incoming broadcast/multicast traffic ; and
- A Broadcast Multicast Service Centre BM_SC in charge of providing the service to the end-user UE. It serves as an entry point for content providers.

In a first non-limiting embodiment, the density estimates Dy are determined using the sum of unicast powers $\Sigma P_{DCH}$, and wherein the tuning means TM are adapted to :

- determining estimates of the sum of unicast powers $\Sigma P_{DCH}$;
- if said sum estimate $\Sigma P_{DCH}$ is above or below a predetermined threshold, performing said increasing by said first predetermined amount $\delta_n$, or
- if said sum estimate $\Sigma P_{DCH}$ is equal to the predetermined threshold, second decreasing the transmit power PFACH by the first predetermined amount $\delta_n$.

In a second non-limiting embodiment, the density estimates Dy are determined using the sum of unicast powers $\Sigma P_{DCH}$, and wherein the tuning means TM are adapted to:

- determining estimates of the sum of unicast powers $\Sigma P_{DCH}$;
- determining whether the values of such estimates of the sum of unicast powers $\Sigma P_{DCH}$ have increased or decreased over the predetermined time interval ;
- if the values of the estimates of the sum of unicast powers $\Sigma P_{DCH}$ tend to increase over the predetermined time interval, performing said increasing with a second predetermined amount $\gamma_n$; or
- if the values of the estimates of the sum of unicast powers $\Sigma P_{DCH}$ tend to decrease over the predetermined time interval, decreasing the transmit power of the broadcast channel by the first predetermined amount $\delta_n$.

In a third non-limiting embodiment, said tuning means TM are composed of a radio resource controller RRC of said radio access point eNodeB, as illustrated in Fig. 6.

In a fourth non-limiting embodiment, said tuning means TM are composed of said broadcast multicast service center BM_SC, as illustrated in Fig. 7.

There are numerous ways of implementing functions of the managing method by means of items of hardware or software, or both, provided that a single item of hardware or software can carry out several functions. It does not exclude that an assembly of items of hardware or software or both carry out a function. For example, the step of computing the values of estimates of the sum of unicast powers may be combined with the step of computing the total traffic power, thus forming a single function without modifying the tuning method in accordance with the invention.

Said hardware or software items can be implemented in several manners, such as by means of wired electronic circuits or by means of a computer program product that is suitable programmed respectively. A computer program product PG can be contained in a computer or in a cellular radiocommunication network ntw, said network ntw comprising a unit control, said unit control being hardware or software items as above stated. In a non-limiting embodiment, said computer program product PG can be contained in the radio resource controller RRC of the radio access point eNodeB. In another non-limiting embodiment, said computer program product PG can be contained in the broadcast multiservice center BM_SC.

The computer program product PG comprises a set of instructions.

Thus, said set of instructions contained, for example, in a computer programming memory or in a cellular radiocommunication network ntw, may cause the computer or the cellular radiocommunication network ntw to carry out the different steps of the managing method.

The set of instructions may be loaded into the programming memory by reading a data carrier such as, for example, a disk. A service provider can also make the set of instructions available via a communication network such as, for example, the Internet.

Any reference sign in the following claims should not be construed as limiting the claim. It will be obvious that the verb "to comprise" and its conjugations do not exclude the presence of any other steps or elements beside those defined in any claim. The word "a" or "an" preceding an element or step does not exclude the presence of a plurality of such elements or steps.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. Method for managing the transmit power (PFACH) of a broadcast channel (MBMS_CH) transmitted by a radio access point in a cellular radiocommunication network in a geographical area (Zu) of the radio coverage of a cell (C) served by the radio access point, the cellular radiocommunication network further comprising user terminals adapted for receiving data transmitted by radio access points (eNodeB) over broadcast and/or unicast channels, the method comprising, with respect to user terminals receiving data broadcast by the radio access point in an established broadcast session (MBMS_S) over the broadcast channel, **characterised in that** it comprises the further steps of:

   - decreasing the transmit power of the broadcast channel (PFACH) by a first predetermined amount ($\delta n$);
   - determining over a predetermined time interval (W) a plurality of estimates of the density (Dy) of user terminals (UE) located within the cell (C) and outside said geographical area (Zu), which user terminals receive the broadcast session through at least one of the unicast channels ; and
   - increasing the transmit power of the broadcast channel (PFACH) by a predetermined amount ($\delta n$, $\gamma n$) if the values of estimates of the density (Dy) tend to increase over time.

2. The method of claim 1, wherein the density estimates (Dy) are determined using the sum of unicast powers ($\Sigma$PDCH) transmitted to the users that use a unicast channel for said broadcast session, the method further comprising:

   - determining estimates of said sum of unicast powers ($\Sigma$PDCH) ;
   - if said sum estimate ($\Sigma$PDCH) is above a predetermined threshold, performing said increasing by said first predetermined amount ($\delta n$), or
   - if said sum estimate ($\Sigma$PDCH) is equal to the predetermined threshold, second decreasing the transmit power (PFACH) by the first predetermined amount ($\delta n$).

3. The method of claim 1, wherein the density estimates (Dy) are determined using the sum of unicast powers ($\Sigma$PDCH) transmitted to the users that use a unicast channel for said broadcast session, and the method further comprising:

   - determining estimates of said sum of unicast powers ($\Sigma$PDCH) ;
   - determining whether the values of such estimates of the sum of unicast powers ($\Sigma$PDCH) have increased or decreased over the predetermined time interval;
   - if the values of the estimates of the sum of unicast powers ($\Sigma$PDCH) tend to increase over the predetermined time interval, performing said increasing with a second predetermined amount ($\gamma n$); or
   - if the values of the estimates of the sum of unicast powers ($\Sigma$PDCH) tend to decrease over the predetermined time interval, second decreasing the transmit power of the broadcast channel by the first predetermined amount ($\delta n$).

4. The method of claim 3, wherein the total traffic power (PT) over the cell comprises:

- the handover traffic power (Pho) of the handovers user terminals passing through the cell ;
- the unicast traffic power (PDCH) of user terminals using unicast channel to receive a broadcast session or to receive a unicast session;
- the broadcast traffic power (PFACH) of user terminals using broadcast channel to receive a broadcast session ; and
- the controlling traffic power (Pcch).

5. The method according to any of the previous claims, wherein said broadcast channel is an MBMS channel.

6. Cellular radiocommunication network (ntw) for managing the transmit power (PFACH) of a broadcast channel (MBMS_CH) transmitted by a radio access point in said cellular radiocommunication network in a geographical area (Zu) of the radio coverage of a cell (C) served by the radio access point, the cellular radiocommunication network further comprising user terminals adapted for receiving data transmitted by radio access points over broadcast and/or unicast channels, said cellular radiocommunication network comprising tuning means (TM) adapted to, with respect to user terminals receiving data broadcast by the radio access point in an established broadcast session (MBMS_S) over the broadcast channel **characterised in that** the tuning means (TM) are further adapted for

- decreasing the transmit power of the broadcast channel (PFACH) by a first predetermined amount ($\delta$n);
- determining over a predetermined time interval (W) a plurality of estimates of the density (Dy) of user terminals (UE) located within the cell (C) and outside said geographical area (Zu), which user terminals receive the broadcast session through at least one of the unicast channels ; and
- increasing the transmit power of the broadcast channel (PFACH) by a predetermined amount ($\delta$n, $\gamma$n) if the values of estimates of the density (Dy) tend to increase over time.

7. The cellular radiocommunication network (ntw) of claim 6, wherein the density estimates (Dy) are determined using the sum of unicast powers ($\Sigma$PDCH) transmitted to the users that use a unicast channel for said broadcast session, and wherein the tuning means (TM) are adapted to :

- determining estimates of said sum of unicast powers ($\Sigma$PDCH) ;
- if said sum estimate ($\Sigma$PDCH) is above a predetermined threshold, performing said increasing by said first predetermined amount ($\delta$n), or
- if said sum estimate ($\Sigma$PDCH) is equal to the predetermined threshold, second decreasing the transmit power (PFACH) by the first predetermined amount ($\delta$n).

8. The cellular radiocommunication network (ntw) of claim 6, wherein the density estimates (Dy) are determined using the sum of unicast powers ($\Sigma$PDCH) transmitted to the users that use a unicast channel for said broadcast session, and wherein the tuning means (TM) are adapted to :

- determining estimates of said sum of unicast powers ($\Sigma$PDCH) ;
- determining whether the values of such estimates of the sum of unicast powers ($\Sigma$PDCH) have increased or decreased over the predetermined time interval ;
- if the values of the estimates of the sum of unicast powers ($\Sigma$PDCH) tend to increase over the predetermined time interval, performing said increasing with a second predetermined amount ($\gamma$n); or
- if the values of the estimates of the sum of unicast powers ($\Sigma$PDCH) tend to decrease over the predetermined time interval, second decreasing the transmit power of the broadcast channel by the first predetermined amount ($\delta$n).

9. The cellular radiocommunication network (ntw) according to the any one of the previous claims 6 to 8, wherein said tuning means (TM) are composed of a radio resource controller (RRC) of said radio access point (eNodeB).

10. The cellular radiocommunication network (ntw) according to any one of the previous claims 6 to 9, wherein said tuning means (TM) are composed of a broadcast multicast service center (BM_SC).

11. A computer program product, comprising a set of instructions, which when loaded into said computer, causes the computer to carry out the method for managing the transmit power (PFACH) of a broadcast channel, according to any one of the previous claims 1 to 5.

**Patentansprüche**

1. Verfahren zur Verwaltung der Senderleistung (PFACH) eines von einem Funkzugangspunkt in einem zellularen Funkkommunikationsnetzwerk in einem geografischen Bereich (Zu) der Funkabdeckung einer von dem Funkzugangspunkt bedienten Zelle (C) übertragenen Broadcast-Kanals (MBMS_CH), wobei das zellulare Funkkommunikationsnetzwerk weiterhin Benutzerendgeräte umfasst, welche für den Empfang von von Funkzugangspunkten (eNodeB,) über Broadcast- und/oder Unicast-Kanäle übertragenen Daten ausgelegt sind, wobei das Verfahren in Bezug auf Benutzerendgeräte das Empfangen von von dem Funkzugangspunkt in einer aufgebauten Broadcast-Sitzung (MBMS_S) über den Broadcast-Kanal übertragenen Daten umfasst, **dadurch gekennzeichnet, dass** es weiterhin die folgenden Schritte umfasst:

   - Verringern der Sendeleistung des Broadcast-Kanals (PFACH) um einen ersten vorbestimmten Betrag ($\delta n$);
   - Ermitteln, über ein vorbestimmtes Zeitintervall (W) hinweg, einer Vielzahl von Schätzungen der Dichte (Dy) von sich innerhalb de Zelle (C) und außerhalb des besagten geografischen Bereichs (Zu) befindlichen Benutzerendgeräten (UE), wobei die besagten Benutzerendgeräte die Broadcast-Sitzung über mindestens einen der Unicast-Kanäle empfangen; und
   - Erhöhen der Sendeleistung des Broadcast-Kanals (PFACH) um einen vorbestimmten Betrag ($\delta n$, $\gamma n$), wenn die Werte der Schätzungen der Dichte (Dy) dazu neigen, sich im Laufe der Zeit zu erhöhen.

2. Verfahren nach Anspruch 1, wobei die Dichteschätzungen (Dy) unter Verwendung der Summe von an die Benutzer, welche einen Unicast-Kanal für die besagte Broadcast-Sitzung benutzen, übertragenen Unicast-Leistungen ($\Sigma$PDCH) ermittelt werden, wobei das Verfahren weiterhin umfasst:

   - Ermittelt von Schätzungen der besagten Summe von Unicast-Leistungen ($\Sigma$PDCH);
   - wenn die besagte Summenschätzung (ZPDCH) einen vorbestimmten Grenzwert überschreitet, Durchführen der besagten Erhöhung um den besagten ersten vorbestimmten Betrag ($\delta n$), oder
   - wenn die besagte Summenschätzung ($\Sigma$PDCH) dem vorbestimmten Grenzwert entspricht, zweites Verringern der Sendeleistung (PFACH) um den ersten vorbestimmten Betrag ($\delta n$).

3. Verfahren nach Anspruch 1, wobei die Dichteschätzungen (Dy) unter Verwendung der Summe von an die Benutzer, welche einen Unicast-Kanal für die besagte Broadcast-Sitzung benutzen, übertragenen Unicast-Leistungen ($\Sigma$PDCH) ermittelt werden, wobei das Verfahren weiterhin umfasst:

   - Ermitteln von Schätzungen der besagten Summe von Unicast-Leistungen ($\Sigma$PDCH);
   - Ermitteln, ob sich die Werte dieser Schätzungen der Summe von Unicast-Leistungen ($\Sigma$PDCH) über das vorbestimmte Zeitintervall hinweg erhöht oder verringert haben;
   - wenn die Werte der Schätzungen der Summe von Unicast-Leistungen ($\Sigma$PDCH) dazu neigen, sich über das vorbestimmte Zeitintervall hinweg zu erhöhen, Durchführen der besagten Erhöhung mit einem zweiten vorbestimmten Betrag ($\gamma n$); oder
   - wenn die Werte der Schätzungen der Summe von Unicast-Leistungen ($\Sigma$PDCH) dazu neigen, sich über das vorbestimmte Zeitintervall hinweg zu verringern, zweites Verringern der Sendeleistung des Broadcast-Kanals um den ersten vorbestimmten Betrag ($\delta n$).

4. Verfahren nach Anspruch 3, wobei die Gesamtverkehrsleistung (PT) über die Zelle umfasst:

   - Die Handover-Verkehrsleistung (Pho) der Handover-Benutzerendgeräte, welcher durch die Zelle fließt;
   - die Unicast-Verkehrsleistung (PDCH) von Benutzerendgeräten, welche einen Unicast-Kanal für den Empfang einer Broadcast-Sitzung oder für den Empfang einer Unicast-Sitzung benutzen;
   - die Broadcast-Verkehrsleistung (PFACH) von Benutzerendgeräten, welche einen Broadcast-Kanal für den Empfang einer Broadcast-Sitzung benutzen; und
   - die Steuerverkehrsleistung (Pcch).

5. Verfahren nach einem beliebigen der vorstehenden Ansprüche, wobei der besagte Broadcast-Kanal ein MBMS-Kanal ist.

6. Zellulares Funkkommunikationsnetzwerk (ntw) zur Verwaltung der Sendeleistung (PFACH) eines von einem Funkzugangspunkt in einem zellularen Funkkommunikationsnetzwerk in einem geografischen Bereich (Zu) der Funkabdeckung einer von dem Funkzugangspunkt bedienten Zelle (C) übertragenen Broadcast-Kanals (MBMS_CH), wobei das zellulare Funkkommunikationsnetzwerk weiterhin Benutzerendgeräte umfasst, welche für den Empfang von von Funkzugangspunkten über Broadcast- und/oder Unicast-Kanäle übertragenen Daten ausgelegt sind, wobei das besagte zellulare Funkkommunikationsnetzwerk Abstimmmittel (TM) umfasst, welche dazu ausgelegt sind, in Bezug auf Benutzerendgeräte Daten zu empfangen, die von dem Funkzugangspunkt in einer aufgebauten Broadcast-Sitzung (MBMS_S) über den Broadcast-Kanal übertragen werden, **dadurch gekennzeichnet, dass** die Abstimmmittel (TM) weiterhin für das Durchführen der folgenden Schritte ausgelegt sind:

- Verringern der Sendeleistung des Broadcast-Kanals (PFACH) um einen ersten vorbestimmten Betrag ($\delta$n);
- Ermitteln, über ein vorbestimmtes Zeitintervall (W) hinweg, einer Vielzahl von Schätzungen der Dichte (Dy) von sich innerhalb de Zelle (C) und außerhalb des besagten geografischen Bereichs (Zu) befindlichen Benutzerendgeräten (UE), wobei die besagten Benutzerendgeräte die Broadcast-Sitzung über mindestens einen der Unicast-Kanäle empfangen; und
- Erhöhen der Sendeleistung des Broadcast-Kanals (PFACH) um einen vorbestimmten Betrag ($\delta$n, $\gamma$n), wenn die Werte der Schätzungen der Dichte (Dy) dazu neigen, sich im Laufe der Zeit zu erhöhen.

7. Zellulares Funkkommunikationsnetzwerk (ntw) nach Anspruch 6, wobei die Dichteschätzungen (Dy) unter Verwendung der Summe von an die Benutzer, welche einen Unicast-Kanal für die besagte Broadcast-Sitzung benutzen, übertragenen Unicast-Leistungen ($\Sigma$PDCH) ermittelt werden, und wobei die Abstimmmittel (TM) für das Durchführen der folgenden Schritte ausgelegt sind:

- Ermitteln von Schätzungen der besagten Summe von Unicast-Leistungen ($\Sigma$PDCH);
- wenn die besagte Summenschätzung ($\Sigma$PDCH) einen vorbestimmten Grenzwert überschreitet, Durchführen der besagten Erhöhung um den besagten ersten vorbestimmten Betrag ($\delta$n), oder
- wenn die besagte Summenschätzung ($\Sigma$PDCH) dem vorbestimmten Grenzwert entspricht, zweites Verringern der Sendeleistung (PFACH) um den ersten vorbestimmten Betrag ($\delta$n).

8. Zellulares Funkkommunikationsnetzwerk (ntw) nach Anspruch 6, wobei die Dichteschätzungen (Dy) unter Verwendung der Summe von an die Benutzer, welche einen Unicast-Kanal für die besagte Broadcast-Sitzung benutzen, übertragenen Unicast-Leistungen ($\Sigma$PDCH) ermittelt werden, und wobei die Abstimmittel (TM) für das Durchführen der folgenden Schritte ausgelegt sind:

- Ermitteln von Schätzungen der besagten Summe von Unicast-Leistungen ($\Sigma$PDCH);
- Ermitteln, ob sich die Werte dieser Schätzungen der Summe von Unicast-Leistungen ($\Sigma$PDCH) über das vorbestimmte Zeitintervall hinweg erhöht oder verringert haben;
- wenn die Werte der Schätzungen der Summe von Unicast-Leistungen ($\Sigma$PDCH) dazu neigen, sich über das vorbestimmte Zeitintervall hinweg zu erhöhen, Durchführen der besagten Erhöhung mit einem zweiten vorbe-stimmten Betrag ($\gamma$n); oder
- wenn die Werte der Schätzungen der Summe von Unicast-Leistungen ($\Sigma$PDCH) dazu neigen, sich über das vorbestimmte Zeitintervall hinweg zu verringern, zweites Verringern der Sendeleistung des Broadcast-Kanals um den ersten vorbestimmten Betrag ($\delta$n).

9. Zellulares Funkkommunikationsnetzwerk (ntw) nach einem beliebigen der vorstehenden Ansprüche 6 bis 8, wobei die besagten Abstimmmittel (TM) aus einem Funkressourcen-Controller (RRC) des besagten Funkzugangspunktes (eNodeB) bestehen.

10. Zellulares Funkkommunikationsnetzwerk (ntw) nach einem beliebigen der vorstehenden Ansprüche 6 bis 9, wobei die besagten Abstimmmittel (TM) aus einem Broadcast-Multicast-Dienstzentrum (BM_SC) bestehen.

11. Computerprogramm-Produkt, umfassend einen Satz von Befehlen, welche, wenn es auf dem besagten Computer geladen ist, bewirken, dass der Computer das Verfahren zur Verwaltung der Sendeleistung (PFACH) eines Broadcast-Kanals gemäß einem beliebigen der vorstehenden Ansprüche 1 bis 5 durchzuführen.

## Revendications

1. Procédé de gestion de la puissance d'émission (PFACH) d'un canal de diffusion (MBMS_CH) émise par un point d'accès radio dans un réseau de radiocommunication cellulaire dans une zone géographique (Zu) de la couverture radio d'une cellule (C) desservie par le point d'accès radio, le réseau de radiocommunication cellulaire comprenant en outre des terminaux d'utilisateurs adaptés pour recevoir des données émises par des points d'accès radio (eNodeB,) sur des canaux de diffusion et/ou de monodiffusion, le procédé comprenant, par rapport aux terminaux d'utilisateurs qui reçoivent des données diffusées par le point d'accès radio dans une session de diffusion établie (MBMS_S) sur le canal de diffusion, **caractérisé en ce qu'**il comprend les étapes supplémentaires suivantes :

- diminuer la puissance d'émission du canal de diffusion (PFACH) selon une première quantité prédéterminée ($\delta$n) ;
- déterminer au cours d'un intervalle de temps prédéterminé (W) une pluralité d'estimations de la densité (Dy) des terminaux d'utilisateurs (UE) situés à l'intérieur de la cellule (C) et à l'extérieur de ladite zone géographique (Zu), lesquels terminaux d'utilisateurs reçoivent la session de diffusion à travers au moins un des canaux de monodiffusion ; et
- augmenter la puissance d'émission du canal de diffusion (PFACH) selon une quantité prédéterminée ($\delta$n, $\gamma$n) si les valeurs des estimations de la densité (Dy) ont tendance à augmenter dans le temps.

2. Procédé selon la revendication 1, dans lequel les estimations de la densité (Dy) sont déterminées en utilisant la somme des puissances de monodiffusion ($\Sigma$PDCH) émises vers les utilisateurs qui utilisent un canal de monodiffusion pour ladite session de diffusion, le procédé comprenant en outre les étapes suivantes :

- déterminer des estimations de ladite somme de puissances de monodiffusion ($\Sigma$PDCH) ;
- si ladite estimation de somme ($\Sigma$PDCH) est supérieure à un seuil prédéterminé, exécuter ladite augmentation selon ladite première quantité prédéterminée ($\delta$n), ou
- si ladite estimation de somme ($\Sigma$PDCH) est égale au seuil prédéterminé, diminuer une deuxième fois la puissance d'émission (PFACH) selon la première quantité prédéterminée ($\delta$n).

3. Procédé selon la revendication 1, dans lequel les estimations de la densité (Dy) sont déterminées en utilisant la somme des puissances de monodiffusion ($\Sigma$PDCH) émises vers les utilisateurs qui utilisent un canal de monodiffusion pour ladite session de diffusion, et le procédé comprend en outre les étapes suivantes :

- déterminer des estimations de ladite somme de puissances de monodiffusion ($\Sigma$PDCH) ;
- déterminer si les valeurs de ces estimations de la somme des puissances de monodiffusion ($\Sigma$PDCH) ont augmenté ou diminué au cours de l'intervalle de temps prédéterminé ;
- si les valeurs des estimations de la somme des puissances de monodiffusion ($\Sigma$PDCH) ont tendance à augmenter au cours de l'intervalle de temps prédéterminé, exécuter ladite augmentation avec une deuxième quantité prédéterminée ($\gamma$n) ; ou
- si les valeurs des estimations de la somme des puissances de monodiffusion ($\Sigma$PDCH) ont tendance à diminuer au cours de l'intervalle de temps prédéterminé, diminuer une deuxième fois la puissance d'émission du canal de diffusion selon la première quantité prédéterminée ($\delta$n).

4. Procédé selon la revendication 3, dans lequel la puissance du trafic totale (PT) sur la cellule comprend :

- la puissance du trafic de transfert (Pho) des terminaux d'utilisateurs de transferts traversant la cellule ;
- la puissance du trafic de monodiffusion (PDCH) de terminaux d'utilisateurs utilisant un canal de monodiffusion pour recevoir une session de diffusion, ou pour recevoir une session de monodiffusion ;
- la puissance du trafic de diffusion (PFACH) de terminaux d'utilisateurs utilisant un canal de diffusion pour recevoir une session de diffusion ; et
- la puissance du trafic de commande (Pcch).

5. Procédé selon l'une quelconque des revendications précédentes, dans lequel ledit canal de diffusion est un canal MSBMS.

6. Réseau de radiocommunication cellulaire (ntw) pour gérer la puissance d'émission (PFACH) d'un canal de diffusion (MBMS_CH) émise par un point d'accès radio dans ledit réseau de radiocommunication cellulaire dans une zone géographique (Zu) de la couverture radio d'une cellule (C) desservie par le point d'accès radio, le réseau de radiocommunication cellulaire comprenant en outre des terminaux d'utilisateurs adaptés pour recevoir des données émises par des points d'accès radio sur des canaux de diffusion et/ou de monodiffusion, ledit réseau de radiocommunication cellulaire comprenant des moyens d'accord (TM) adaptés, par rapport aux terminaux d'utilisateurs qui reçoivent des données diffusées par le point d'accès radio dans une session de diffusion établie (MBMS_S) sur le canal de diffusion, en outre pour

- diminuer la puissance d'émission du canal de diffusion (PFACH) selon une première quantité prédéterminée ($\delta n$) ;
- déterminer au cours d'un intervalle de temps prédéterminé (W) une pluralité d'estimations de la densité (Dy) des terminaux d'utilisateurs (UE) situés à l'intérieur de la cellule (C) et à l'extérieur de ladite zone géographique (Zu), lesquels terminaux d'utilisateurs reçoivent la session de diffusion à travers au moins un des canaux de monodiffusion ; et
- augmenter la puissance d'émission du canal de diffusion (PFACH) selon une quantité prédéterminée ($\delta n$, $\gamma n$) si les valeurs des estimations de la densité (Dy) ont tendance à augmenter dans le temps.

7. Réseau de radiocommunication cellulaire (ntw) selon la revendication 6, dans lequel les estimations de la densité (Dy) sont déterminées en utilisant la somme des puissances de monodiffusion ($\Sigma$PDCH) émises vers les utilisateurs qui utilisent un canal de monodiffusion pour ladite session de diffusion, et dans lequel les moyens d'accord (TM) sont adaptés pour :

- déterminer des estimations de ladite somme de puissances de monodiffusion ($\Sigma$PDCH) ;
- si ladite estimation de somme ($\Sigma$PDCH) est supérieure à un seuil prédéterminé, exécuter ladite augmentation selon ladite première quantité prédéterminée ($\delta n$), ou
- si ladite estimation de somme ($\Sigma$PDCH) est égale au seuil prédéterminé, diminuer une deuxième fois la puissance d'émission (PFACH) selon la première quantité prédéterminée ($\delta n$).

8. Réseau de radiocommunication cellulaire (ntw) selon la revendication 6, dans lequel les estimations de la densité (Dy) sont déterminées en utilisant la somme des puissances de monodiffusion ($\Sigma$PDCH) émises vers les utilisateurs qui utilisent un canal de monodiffusion pour ladite session de diffusion, et dans lequel les moyens d'accord (TM) sont adaptés pour :

- déterminer des estimations de ladite somme de puissances de monodiffusion ($\Sigma$PDCH) ;
- déterminer si les valeurs de ces estimations de la somme des puissances de monodiffusion ($\Sigma$PDCH) ont augmenté ou diminué au cours de l'intervalle de temps prédéterminé ;
- si les valeurs des estimations de la somme des puissances de monodiffusion ($\Sigma$PDCH) ont tendance à augmenter au cours de l'intervalle de temps prédéterminé, exécuter ladite augmentation avec une deuxième quantité prédéterminée ($\gamma n$) ; ou
- si les valeurs des estimations de la somme des puissances de monodiffusion ($\Sigma$PDCH) ont tendance à diminuer au cours de l'intervalle de temps prédéterminé, diminuer une deuxième fois la puissance d'émission du canal de diffusion selon la première quantité prédéterminée ($\delta n$) .

9. Réseau de radiocommunication cellulaire (ntw) selon l'une quelconque des revendications précédentes 6 à 8, dans lequel lesdits moyens d'accord (TM) sont composés d'un dispositif de commande de ressources radio (RRC) dudit point d'accès radio (eNodeB) .

10. Réseau de radiocommunication cellulaire (ntw) selon l'une quelconque des revendications précédentes 6 à 9, dans lequel lesdits moyens d'accord (TM) sont composés d'un centre de service de diffusion/multidiffusion (BM_SC).

11. Produit programme d'ordinateur, comprenant un ensemble d'instructions qui, lorsqu'elles sont chargées dans ledit ordinateur, entraînent l'exécution par l'ordinateur du procédé de gestion de la puissance d'émission (PFACH) d'un canal de diffusion, selon l'une quelconque des revendications 1 à 5.

1 — DEACR1_PFACH(n, δn )

2 — COMPUT(Dy, W, UC, MBMS_S)

Dy ↗? 

3 — INCRA2_PFACH(n, δn, γn, W, Dy )

**FIG. 1**

eNodeB

C

Zbo

Zb

UE1

UE2

Zu

**FIG. 2**

$$PFACH,n+1 = PFACH,n - \delta n$$

$$\theta\,(n+1) = \sum_{i=1}^{M(n+1)} PDCH,i(MBMS\_SV) \quad , W=[n,\, n+T[$$

n=T

WAIT_T

$$PFACH,n+T = PFACH,0$$

(3b)    NOK             OK

$$\theta(n+T)\neq0\ ?$$

(3a)

**FIG. 3**

$$PFACH,n+1 = PFACH,n - \delta n$$

$$PRACH,n+1 = PFACH,n + \gamma n$$

$$\theta(n+1) = \sum_{i=1}^{M(n+1)} PDCH,i(MBMS\_SV) \quad , W=[n, n+T[$$

$$n=n-k*T$$

$$n=n+k*T$$

WAIT_T

$$TR(\theta(n+T)) = Q \ ?$$

NOK (3a) OK

$$TR(\theta) \ ?$$

(3c) NOK OK (3b)

FIG. 4

FIG. 5

ntw

BM_SC

MBMS_GW

eNodeB

TM= RRC

PG

DEACR1_PFACH(n, δn )

COMPUT(Dy, W, UC, MBMS_S)

INCRA2_PFACH(n, δn, γn,  W, Dy )

UE1

UE2

FIG. 6

20

ntw

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050043033 A1
- US 20050085254 A1

- EP 2152029 A1

**Non-patent literature cited in the description**

- Improved video support for Packet Switched Streaming (PSS) and Multimedia Broadcast/Multicast Service (MBMS) Services (Release 10. *3GPP TR 26.903 V10.0.0,* March 2011